# EUROPEAN PATENT APPLICATION

(11) **EP 2 557 440 A1**
(43) Date of publication of application: **13.02.2013**
(21) Application number: 12180268.0
(22) Date of filing: 13.08.2012
(51) Int. Cl.: G02B 6/12

(54) **Beam combiner**

(30) Priority: 12.08.2011 US 201113208806
(71) Applicant: Octrolix BV, 7500 AH Enschede (NL)
(72) Inventor: Klein, Dr. Ir Edwin Jan, 7521 WV Enschede (NL); Dekker, Ronald, 7522 AJ Enschede (NL); Bulthuis, Hindrik F., 7323 RK Apeldoorn (NL)
(74) Representative: Williams, David John

(57) **Abstract**

A beam combiner (100) is disclosed that comprises a planar lightwave circuit that is based on undoped silicon nitride-based surface waveguides (102), wherein the planar lightwave circuit comprises a plurality of input ports (104), a mixing region (106), and an output port (110), and wherein the mixing region (106) comprises a plurality of directional couplers (108) that are arranged in a tree structure. Embodiments of the present invention are capable of combining a plurality of light signals characterized by disparate wavelengths on irregular spacings with low loss. Further, the present invention enables high-volume, low cost production of beam combiners capable of combining three or more light signals into a single composite output beam.

## Description

### Cross Reference to Related Applications

This application claims the benefit of European Patent Application EP10008424.3, filed August 12, 2010, U.S. Provisional Application Serial Number 61/344,553, filed August 19, 2010 (Attorney Docket: 094111-0388630), U.S. Provisional Application Serial Number 61/376,483, filed August 24, 2010 (Attorney Docket: 094111-0388719), and U.S. Provisional Application Serial Number 61/477,960, filed April 21, 2011 (Attorney Docket: 142-017PROV), each of which is incorporated by reference.

If there are any contradictions or inconsistencies in language between this application and one or more of the cases that have been incorporated by reference that might affect the interpretation of the claims in this case, the claims in this case should be interpreted to be consistent with the language in this case.

### Field of the Invention

The present invention relates to planar lightwave circuits in general, and, more particularly, to planar lightwave circuit-based optical beam combiners.

### Background of the Invention

An ability to combine multiple light signals, each comprising different wavelengths, into a single output light signal is needed in many applications, such as quality control of produce such as fruits and vegetables, confocal microscopy, medical diagnosis, disease treatment, and waste sorting in recycling and waste management.

In an effort to satisfy this need, prior-art beam combiners based on several different technologies have been developed. These include free-space beam combiners, fiber-based beam combiners, and surface waveguide combiners based on either array-waveguide gratings or lithium niobate waveguides. Unfortunately, each of these approaches has significant drawbacks that have thus far limited their use in many applications.

Free-space beam combiners employ bulk optics elements such as mirrors, dichroic elements, filters, and lenses to bring light signals arriving on different optical paths into a single output optical path. As a result, they are bulky and expensive. In addition, the alignment of the multiple bulk elements is typically thermally sensitive and also very labor intensive. High-volume production of such systems, therefore, is difficult to do at reasonable cost and speed. Still further, the difficulty of aligning the optical components becomes increasingly difficult with each added light signal to be combined.

Optical fiber-based beam combiners employ multiple input optical fibers that are heated and then fused together to bring their cores into proper alignment with one another. The fabrication of these fusion-spliced combiners can be extremely difficult, particularly when three or more input optical fibers are desired. The difficulty arises from the way in which such combiners are made. Initially, two fibers are fused to put their cores into a close physical relationship. Once this fusion step is complete, a third fiber is added to the output portion of the first fusion splice by repeating the fusion process for the output portion and a third fiber. Unfortunately, it is extremely difficult to add the third fiber to the fusion splice without degrading the quality of overall system, since it is necessary that the complete fusion-spliced beam combiner work for all wavelengths simultaneously. In addition, for many applications, it is necessary to preserve polarization properties in the system, which is exceedingly difficult to enable with a fusion-spliced optical fiber-based beam combiner. These difficulties are exacerbated by the fact that it is typically desirable to keep the overall size of the fusion-splice region small. Further, the process becomes increasingly difficult as more and more fibers are added to the fiber-based beam combiner. As a result, high-volume production of fiber-based beam combiners is difficult. In addition, while smaller than free-space beam combiners, fiber-based combiners also tend to be too large and bulky for many desired applications.

Surface waveguide-based beam combiners have been demonstrated based on either silica-based waveguide systems comprising array waveguide gratings (AWGs) or lithium niobate waveguide-based systems. An AWG can combine many light signals that are closely spaced in wavelength and that have substantially regular wavelength spacing. They are ill suited for combining light signals having disparate wavelengths (*i.e*., widely spaced and irregularly spaced in wavelength), however. In addition, higher-order diffraction modes that propagate through an AWG limit the span of wavelengths for which the AWG can be used. Further, since silica waveguides require doping to define the waveguiding elements, their utility at shorter wavelengths (*e.g*., <600 nm) is limited. Further, silica waveguides do not tightly confine the optical mode of propagating light signals; therefore, silica-based optical-circuit elements must be large, which results in very large silica-based planar lightwave circuits.

Directional couplers to multiplex multiple light signals at telecommunications wavelengths (*i*.*e*., 1300 -1600 nm) have been demonstrated in lithium niobate technology. For example, as described by R. C. Alferness in U. S. Patent 4,146,297, issued March 27, 1979, an asymmetric waveguide directional coupler comprising titanium-based waveguides formed in a lithium niobate substrate can be used to enable a single wavelength of light to cross over from one waveguide into the other, wherein the cross-over wavelength is determined by the relative effective refractive indices of the two waveguides. The effective refractive indices of the waveguides are controlled via an applied electric field to "tune" the cross-over wavelength to overcome variations in fabrication. Alferness further discloses a series arrangement of such directional couplers that enables the addition of one or more light signals to a bus waveguide one at a time.

Unfortunately, lithium niobate waveguides are characterized by an operable wavelength range that is relatively narrow. This is due to the reliance of dopants to form lithium niobate waveguides, which can limit their use for applications requiring shorter wavelengths. In addition, in many applications, a high extinction ratio between the TE and TM polarization modes in propagating light is desirable. It is extremely difficult to develop strong polarization dependence in lithium niobate waveguides, however. Finally, lithium niobate is notoriously expensive and difficult to fabricate relative to other waveguide technologies.

### Summary of the Invention

The present invention enables a beam combiner that overcomes some of the costs and disadvantages of the prior art. Embodiments of the present invention are suitable for high-volume production and enable the combination of multiple wavelengths in a device having a small footprint. Embodiments of the present invention are well suited for use in applications that include medical diagnostics, medical treatment modalities, environmental monitoring, food inspection, two-dimensional beam projection, three-dimensional beam projection, and optical sorting of recycled material and other waste.

The present invention provides a platform for combining a plurality of input light signals having disparate wavelengths into a single output light signal. An illustrative embodiment is a planar lightwave circuit comprising a plurality of single-mode surface waveguides that are arranged to collectively define a plurality of input ports, a mixing region, and an output port, wherein the mixing region includes a plurality of directional couplers that are arranged in a tree structure. This planar lightwave circuit is based on single-mode surface waveguides having a core comprising stoichiometric silicon nitride and cladding of undoped silicon dioxide. The use of undoped dielectric materials for the core and cladding layers enables such surface waveguides to enable low-loss propagation of light signals that span an extremely wide range of wavelengths, including wavelengths shorter than 400 nanometers (nm).

Directional couplers included in the mixing region are designed to receive one or more first light signals from a first waveguide and one or more second light signals from a second waveguide and combine all of the first and second light signals into a composite optical signal that is provided on the second waveguide. The directional couplers are designed to enable substantially all of the optical energy of the first light signals in the first waveguide to transfer into the second waveguide, while substantially all of the optical energy of the second light signals remains in the second waveguide.

In the mixing region, directional couplers are arranged in a first arrangement comprising a tree structure. As a result, simply by adding branches or stages to the mixing region, the input port count of the beam combiner, and therefore, the number of light signals that can be combined, can be easily increased. This is in marked contrast to prior-art beam combiners, such as fusion-spliced optical fiber-based beam combiners, wherein increasing the number of input ports beyond two or three becomes increasingly difficult.

In some embodiments, at least one input port has a mode-matching region that enables low-loss optical coupling of a light source to the beam combiner. The mode-matching region includes a waveguide region that is tapered from an end facet to an interface so that the effective refractive-index contrast at the end facet is lower or higher than the effective refractive-index contrast at the interface. At the interface, the optical mode is mode-matched to the waveguide structure that forms the bulk of the planar lightwave circuit to substantially avoid an abrupt impedance mismatch that would result in optical attenuation.

In some embodiments, the beam combiner comprises waveguide-based attenuators for controlling the amount of light from one or more of the light sources that is combined in the mixing region.

An embodiment of the present invention comprises an apparatus comprising a beam combiner that includes a planar lightwave circuit comprising: a plurality of input ports; a mixing region, the mixing region comprising a plurality of directional couplers that are arranged in a first arrangement comprising a tree structure; and a first output port that is optically coupled with the plurality of input ports via the mixing region.

### Brief Description of the Drawings

FIG. 1 depicts a schematic drawing of a portion of a beam combiner in accordance with an illustrative embodiment of the present invention.

FIG. 2A depicts a schematic drawing of a cross-sectional view of a waveguide structure in accordance with the illustrative embodiment of the present invention.

FIG. 2B depicts a schematic drawing of a cross-sectional view of a waveguide in accordance with an alternative embodiment of the present invention.

FIG. 3A depicts a plot of coupling behavior for a directional coupler design in accordance with the illustrative embodiment of the present invention.

FIG. 3B depicts a schematic representation of the wavelength coupling behavior of directional coupler **108-1.**

FIG. 3C depicts a plot of output power versus coupler region length for a directional coupler in accordance with the illustrative embodiment of the present invention.

FIG. 3D depicts a schematic representation of the wavelength coupling behavior of an alternative directional coupler design suitable for light signals having relatively larger wavelength differences.

FIG. 3E depicts a plot of output power versus coupler region length for directional coupler **310.**

FIG. 4 depicts a schematic drawing of a beam combiner in accordance with a first alternative embodiment of the present invention.

FIG. 5A depicts a schematic drawing of a top view of a mode-matching region in accordance with the first alternative embodiment of the present invention.

FIG. 5B depicts a schematic drawing of a cross-sectional view of the end facet of a mode-matching region in accordance with the first alternative embodiment of the present invention.

FIG. 5C depicts a schematic drawing of a cross-sectional view of the interface of a mode-matching region in accordance with the first alternative embodiment of the present invention.

FIG. 6 depicts a schematic drawing of an attenuator/switch and optical monitor in accordance with the first alternative embodiment of the present invention.

FIG. 7 depicts a schematic drawing of a beam combiner in accordance with a second alternative embodiment of the present invention.

FIG. 8 depicts a schematic drawing of a polarization filter in accordance with the second alternative embodiment of the present invention.

### Detailed Description

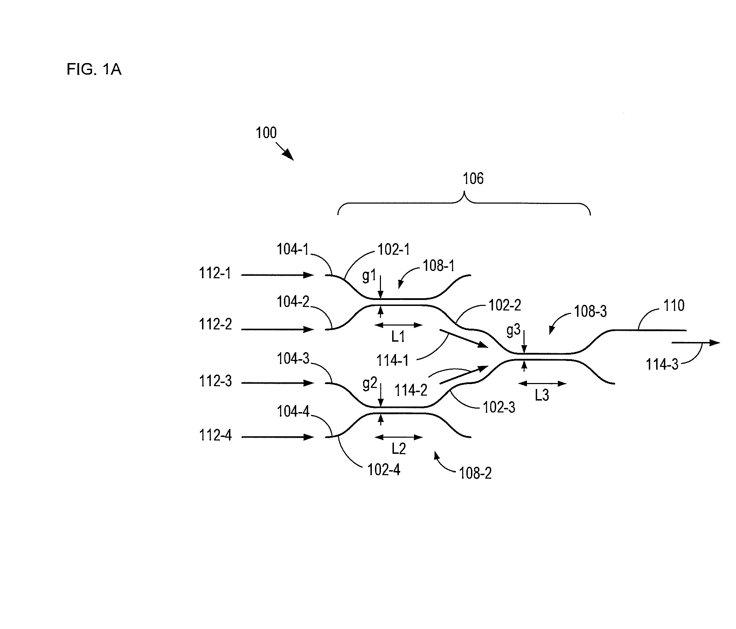

FIG. 1 depicts a schematic drawing of a portion of a beam combiner in accordance with an illustrative embodiment of the present invention. Beam combiner **100** is a planar lightwave circuit that includes a plurality of surface waveguides **102-1** through **102-4** (referred to, collectively, as waveguides **102),** which are arranged to define input ports **104-1** through **104-4,** mixing region **106,** and output port **110.** For the purposes of this Specification, including the appended claims, a **"planar lightwave circuit"** is defined as an optical circuit that comprises one or more monolithically integrated waveguide structures that are arranged to provide at least one optical function.

Although in the illustrative embodiment beam combiner **100** comprises four inputs, it will be clear to one skilled in the art, after reading this Specification, how to specify, make, and use alternative embodiments of the present invention that include any practical number of inputs.

Each of waveguides **102** is a single-mode waveguides characterized by a large difference between the refractive index of its core material and cladding material (typically referred to as "a high-contrast waveguide"). As a result, each of waveguides **102** is characterized by strong optical mode confinement, can include curved sections that have small bend radii, and can include waveguides in a densely packed arrangement. Planar lightwave circuits based on waveguide **102,** therefore, can provide a high degree of functionality in a much smaller footprint than conventional low-index waveguide-based planar lightwave circuits.

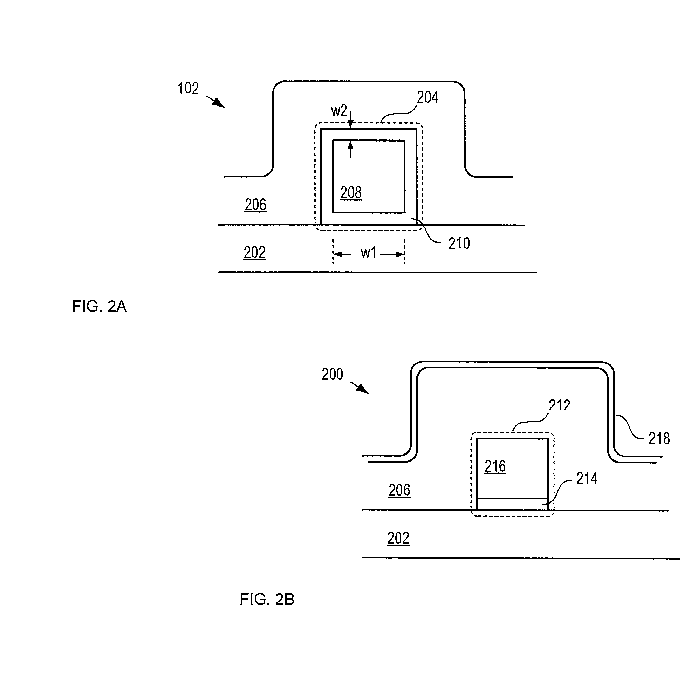

FIG. 2A depicts a schematic drawing of a cross-sectional view of a waveguide structure in accordance with the illustrative embodiment of the present invention. Waveguide **102** is a composite-core waveguide (referred to, herein, as a TriPleX^{™} waveguide), such as is described in U.S. Patent 7,146,087, issued Dec. 5, 2006, which is incorporated herein by reference. Waveguide **102** comprises lower cladding **202,** core **204,** and upper cladding **206.**

Lower cladding **202** is a layer of silicon dioxide having a thickness typically within the range of approximately 1 micron to approximately 10 microns. Lower cladding **202** can be formed by any of a number of conventional methods, including thermal growth, LPCVD deposition, spin-on coating, and the like. It will be clear to one skilled in the art how to specify, make, and use lower cladding **202.**

Core **204** comprises inner core **208** and outer core **210,** which completely surrounds inner core **208.**

Inner core **208** comprises stoichiometric silicon dioxide. Inner core **208** has a substantially square cross-sectional shape having a size, **w1,** of approximately 1 micron on a side. In some embodiments, inner core **208** has a different shape and/or different dimensions.

Outer core **210** comprises stoichiometric silicon nitride having a thickness equal to **w2.** In the illustrative embodiment, **w2** is approximately equal to 200 nm; however, it will be clear to one skilled in the art, after reading this Specification, how to specify, make, and use alternative embodiments of the present invention wherein **w2** is any practical size.

In some embodiments, outer core **210** does not completely surround inner core **210.** In some embodiments, outer core **210** comprises a layer of stoichiometric silicon nitride disposed on inner core **208** and/or a layer of stoichiometric silicon nitride that interposes inner core **208** and lower cladding **202.**

Upper cladding **206** is a layer of silicon dioxide formed as a conformal coating over core **204.** Upper cladding **206** is formed using conventional conformal deposition techniques, such as plasma-enhanced chemical vapor deposition, low-pressure chemical vapor deposition using tetraethyl orthosilicate (TEOS) as a precursor gas, and the like.

FIG. 2B depicts a schematic drawing of a cross-sectional view of a waveguide in accordance with an alternative embodiment of the present invention. Waveguide **200** is a silicon-nitride-core waveguide that comprises lower cladding **202,** core **212,** upper cladding **206,** and barrier layer **218.**

Core **212** comprises lower core **214** and upper core **216,** which is disposed on lower core **214.**

Lower core **214** comprises stoichiometric silicon nitride. Lower core **214** has a substantially rectangular cross-sectional shape having a width within the range of approximately 0.8 microns to approximately 3 microns and a height within the range of approximately 3 nm to approximately 30 nm. In some embodiments, lower core **214** has a different shape and/or different dimensions.

Upper core **216** comprises silicon dioxide deposited using TEOS as a precursor gas. Upper core **216** has a width substantially equal to the width of lower core **214** and a thickness within the range of approximately three to approximately twenty times the thickness of lower core **214.** In some embodiments, upper core **216** enables a reduction in the internal stress of lower core **214** and/or reduces scattering in lower core **214,** as well as having other positive effects that lead to a reduction in propagation loss for light propagating through waveguide **200.** One skilled in the art will recognize, after reading this Specification, that the dimensions of lower core **214** and/or upper core **216** are based on several factors, including the wavelength of light that is expected to propagate through the waveguide.

Upper cladding **206** is covered with optional barrier layer **218.** Barrier layer **218** comprises silicon nitride and provides a barrier to moisture and contaminants that might otherwise be absorbed by waveguide **200.** In some embodiments, barrier layer **218** is not included.

It should be noted that waveguide structures in accordance with the present invention do not require dopant diffusion to achieve their guiding capability. The use of undoped materials, such as stoichiometric silicon nitride and stoichiometric silicon dioxide, enables higher power handling than waveguides that are doped to control refractive index of one or more of their core and cladding. Further, the use of undoped materials also enables low-loss propagation of light having shorter wavelengths than is possible with conventional doped waveguide structures.

Conventional silica-based waveguides and lithium niobate waveguides rely on doping regions of a substrate with impurities, such as phosphorous, boron or germanium, to provide a difference in refractive index. Unfortunately, such dopants are notoriously sensitive to near-ultraviolet light, which limits the use of such waveguides at shorter wavelengths. In addition, it is difficult to control the dopant configuration, which leads to increased cost for such waveguides.

Further, waveguides such as waveguides **102** and **200** enable the beam combiner **100** to operate over an extremely broad wavelength range, as compared to conventional waveguides. Waveguides **102** and **200** can be designed for operation for light having wavelengths within the range of approximately 400 nm to approximately 2000 nm. In some embodiments, waveguides **102** and **200** are designed for operation at even shorter wavelengths.

It is an aspect of the present invention that waveguides in accordance with the present invention enable a high-extinction ratio between the transmission loss for the TE and TM polarization modes of light propagating through beam combiner **100.** As a result, the present invention exhibits better polarization control than beam combiners in the prior art. The difference in propagation loss between the polarization modes arises from several design considerations. First, waveguides in accordance with the present invention exhibit more scattering loss for one polarization mode (typically the TE mode) than the other. Second, some embodiments of the present invention are designed such that one polarization mode (typically the TM mode) optically couples with conventional optical fiber more efficiently than the other polarization mode. Third, in some embodiments, the TE mode is more tightly confined in the waveguides. As a result, this mode does not couple significantly between the waveguides of a directional coupler. Lastly, in some embodiments, directional couplers are designed to be polarization-dependent.

One skilled in the art will recognize, after reading this Specification, that the waveguide structures depicted in FIGS. 2A and 2B represent only two examples of surface waveguide structures suitable for use in beam combiner **100.** It will be clear to one skilled in the art, after reading this Specification, that waveguide structures suitable for use in beam combiner **100** include, without limitation, ridge waveguides, channel waveguides, stripe waveguides, multi-layered waveguides, femto-second laser-written waveguides, graded-index waveguides, and the like.

Returning now to FIG. 1, input ports **104-1** through **104-4** (referred to, collectively, as input ports **104)** receive light signals **112-1** through **112-4,** respectively. In a typical beam-combiner application, the wavelengths of light signals **112-1** through **112-4** are typically separated by a wavelength spacing within the range of approximately 25 nm to approximately 70 nm over a wavelength range that can be as large as approximately 400 nm to approximately 2000 nm. Further, in a typical beam-combiner application, light signals **112-1** through **112-4** are irregularly spaced.

For example, in some beam-combiner applications, such as medical diagnostic applications, light signal **112-1** might be characterized by a wavelength that is readily absorbed by blood, such as 850 nm, light signal **112-2** might be characterized by a wavelength that is readily visible to the human eye (*e.g*., a wavelength within the range of approximately 520 nm to approximately 570 nm, 633 nm, 650 nm, 670 nm, 593.5 nm, 473 nm, or 405 nm), light signal **112-3** might be characterized by a wavelength that is suitable for exciting a phosphor used in vision enhancement systems (*e.g*., night vision goggles, *etc*.), and light signal **112-4** might be characterized by a wavelength suitable for exciting a biological marker comprising a fluorescent label (*e.g*., 488 nm).

Alternatively, in some beam-combiner applications, such as visible-light projectors, light signal **112-1** might be characterized by a wavelength in the blue region, such as approximately 445 nm, light signal **112-2** might be characterized by a wavelength in the green region, such as approximately 532 nm, and light signal **112-3** might be characterized by a wavelength in the red region, such as approximately 640 nm.

The wavelengths described herein are provided merely as examples, and it will be clear to one skilled in the art, after reading this Specification, how to specify, make, and use alternative embodiments of the present invention wherein light signals **112-1** through **112-4** are characterized by any suitable wavelengths within the operating wavelength range of waveguides **102.**

It should be noted that in some embodiments, beam combiner **100** is designed for combining light signals having wavelengths that are closely and/or regularly spaced.

For exemplary purposes, light signals **112** are described herein as being provided by fiber-pigtailed laser diodes. It will be clear to one skilled in the art, after reading this Specification, however, how to specify, make, and use alternative embodiments of the present invention wherein at least one of light signals **112** is provided by a light source other than a fiber-pigtailed laser diode, such as:
i. a light signal that is directly coupled from output facet of a light source; or
ii. a lens that focuses the light output by a light source onto the waveguide facet; or
iii. a surface waveguide that is optically coupled with one of inputs **104.**

Mixing region **106** comprises portions of waveguides **102** that have been arranged to form directional couplers **108-1** through **108-3.**

Directional coupler **108-1** comprises first portions of waveguides **102-1** and **102-2** that are separated by gap **g1** along interaction length **L1.** Directional coupler **108-1** is a symmetric coupler (*i*.*e*., the portions of waveguides **102-1** and **102-2** have substantially the same width) that is characterized by wavelength-dependent power coupling that varies slowly with wavelength. The values of **g1** and **L1** are carefully chosen to enable substantially all of the optical energy in light signal **104-1** to optically couple from waveguide **102-1** into waveguide **102-2** along interaction length **L1,** but substantially none of the optical energy in light signal **104-2** optically couples from waveguide **102-2** to waveguide **102-1.** As a result, directional coupler **108-1** provides both light signals **112-1** and **112-2,** combined as composite output signal **114-1,** on waveguide **102-2.**

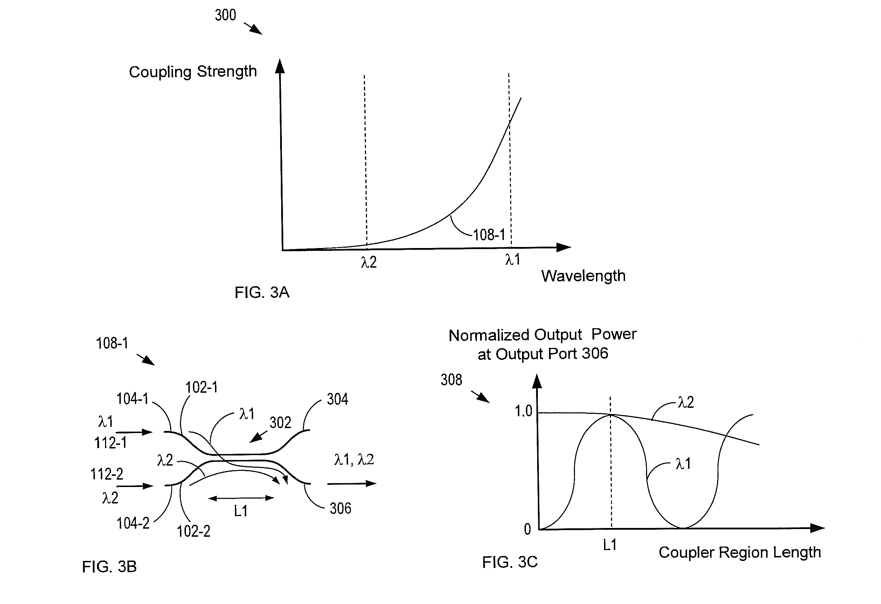

FIG. 3A depicts a plot of coupling behavior for a directional coupler design in accordance with the illustrative embodiment of the present invention. Plot **300** depicts a plot of coupling strength versus wavelength for the design of directional coupler **108-1.** Directional coupler **108-1** has relatively little coupling at shorter wavelengths but relatively strong coupling strength for longer wavelengths. Light signal **112-1** is characterized by wavelength **11** and light signal **112-2** is characterized by wavelength **12.** In addition to wavelengths of light signals **112-1** and **112-2,** the coupling strength of directional coupler **108-1** is based on its design, including the separation between waveguides **102-1** and **102-2** in coupling region **302,** the cross-sections of waveguides **102-1** and **102-2** in coupling region **302,** and the length, **L1,** of coupling region **302.**

FIG. 3B depicts a schematic representation of the wavelength coupling behavior of directional coupler **108-1.** Directional coupler **108-1** receives light characterized by wavelength **11** (*i*.*e*., light signal **112-1)** at input port **104-1** and light characterized by wavelength **12** (*i*.*e*., light signal **112-2)** at input port **104-2.** While traversing coupling region **302,** light signal **112-1** couples substantially completely into waveguide **102-2.** At the same time, while traversing coupling region **302,** light signal **112-2** remains substantially completely within waveguide **102-2.** As a result, both light signals **112-1** and **112-2** exit the directional coupler at output port **306.**

FIG. 3C depicts a plot of output power versus coupler region length for a directional coupler in accordance with the illustrative embodiment of the present invention. Plot **308** depicts the normalized output power at output port **306** versus the length of coupler region **302** for light signals characterized by wavelengths **11** and **12.** Since directional coupler **108-1** has substantially no coupling strength for light signal **112-2,** plot **308** shows little dependence on coupler region length for wavelength **12.** In contrast, directional coupler **108-1** has strong coupling for light signal **112-1;** therefore, plot **308** shows a substantially sinusoidal relationship on coupler region length for the output power of for wavelength **11.** The length of coupling region **302** is chosen as a point where the output power of both wavelengths **11** and **12** is substantially a maximum (*i*.*e*., length **L1).** It should be noted that for a coupling region having length **L1,** wavelength **11** couples once while wavelength **12** never couples, which is fairly typical for signals characterized by moderate wavelength differences.

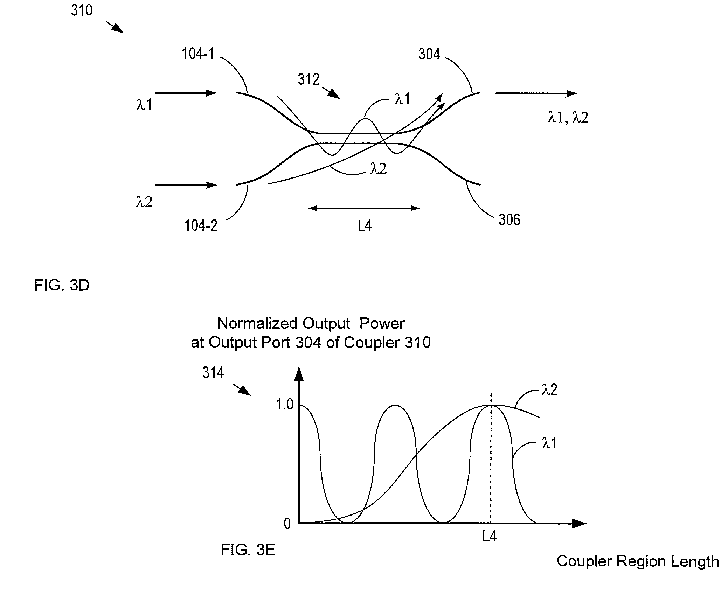

FIG. 3D depicts a schematic representation of the wavelength coupling behavior of an alternative directional coupler design suitable for light signals having relatively larger wavelength differences. Directional coupler **310** is an alternative design for directional coupler **108-1,** which comprises coupler region **312.** Coupler region **312** has a coupling length, **L4,** which enables wavelengths **11** and **12** to couple between waveguides **102-1** and **102-2** multiple times within the coupling region and exit directional coupler **310** as a composite output signal at output **304.**

FIG. 3E depicts a plot of output power versus coupler region length for directional coupler **310.** Plot **314** depicts the normalized output power at output port **304** of coupler **310** versus the length of coupler region **312** for light signals characterized by wavelengths **11** and **12** (*i.e*., light signals **112-1** and **112-2).** Directional coupler **310** enables the optical energy of light signal **112-1,** to couple four times from waveguide **102-2** into waveguide **102-1** over the length of coupling region **312.** In similar fashion, directional coupler **310** enables light signal **112-2** to couple one time over the length of coupling region **312.** The length of coupling region **312** is chosen as a point where the output power of both wavelengths **11** and **12** is substantially a maximum (*i.e*., length **L4).**

Returning now to FIG. 1, directional coupler **108-2** comprises first portions of waveguides **102-3** and **102-4** that are separated by gap **g2** along interaction length **L2.** Directional coupler **108-2** is also characterized by wavelength-dependent power coupling and the values of **g2** and **L2** are selected to enable substantially all of the optical energy in light signal **104-4** to optically couple from waveguide **102-4** into waveguide **102-3** along interaction length **L2,** but substantially none of the optical energy in light signal **104-3** optically couples from waveguide **102-3** into waveguide **102-4.** As a result, directional coupler **108-2** provides both light signals **112-3** and **112-4,** combined as composite output signal **114-2,** on waveguide **102-3.**

Directional couplers **108-1** through **108-3** are arranged in a tree structure such that directional coupler **108-3** receives the composite output signals **114-1** and **114-2** on second portions of waveguides **102-2** and **102-3** that are separated by gap **g3** along interaction length **L3.** Like directional couplers **108-1** and **108-2,** directional coupler **108-3** is characterized by a slowly varying wavelength-dependent power coupling. The values of **g3** and **L3** are chosen to enable substantially all of the optical energy in composite output signal **114-2** (*i.e*., each of light signals **104-3** and **104-4)** to optically couple from waveguide **102-3** into waveguide **102-2** along interaction length **L3,** but substantially none of the optical energy in composite output signal **114-1** optically couples from waveguide **102-2** into waveguide **102-3.** As a result, directional coupler **108-3** provides the optical energy of all four of light signals **112-1** through **112-4,** combined as composite output signal **114-3,** on output port **110** of waveguide **102-2.**

In some embodiments, at least one of directional couplers **108-1** through **108-3** is an asymmetric directional coupler.

It should be noted that FIG. 1 depicts only one example of an arrangement of waveguides **102-1** through **102-4** and directional couplers **108-1** through **108-3** for mapping light signals **112-1** through **112-4** through mixing region **106.** One skilled in the art will recognize, after reading this Specification, that light signals **112-1** through **112-4** can propagate through mixing region **106** via any of several suitable arrangements of waveguides **102** and directional couplers **108** such that the light signals are combined and provided at output port 110 located on any one of the waveguides.

It is an aspect of the present invention that beam combiner **100** can combine multiple light signals characterized by markedly different wavelengths with less cost and complexity than beam combiners known in the prior art. This is due, in part, to the tree structure of directional couplers in mixing region **106,** which is determined by the design of the planar lightwave circuit. The arrangement of directional couplers does not depend upon the population of the input ports. As a result, the present invention facilitates combining groups of wavelengths in numbers that are difficult, if not impossible, with prior-art beam combiners. For example, misalignment of a light source with beam combiner **100** merely results in higher coupling loss for the light signal provided by that source. It would not, however, affect the coupling relationship of that light signal with other light signals. Nor would such misalignment perturb the optical coupling efficiency of any light sources already optically coupled with the beam combiner. In addition, the costs associated with populating beam combiner **100** with multiple light sources is substantially linearly dependent on the number of light sources. Finally, beam combiner **100** can be relatively low cost, as compared to prior-art beam combiners, since it is based on a planar lightwave circuit that is amenable to fabrication using conventional CMOS fabrication, which can be mass-manufactured in a cost-effective manner.

It is another aspect of the present invention that it enables embodiments that are capable of combining more than sixteen light signals, at different wavelengths, without significantly increasing system complexity and cost. The basic design of beam combiner **100** can be expanded to enable the combination of such a large number of light signals by simply adding branches and/or layers to the tree structure of directional couplers in mixing region **106.** These aspects of the present invention are in contrast to beam combiners known in the prior art.

It is yet another aspect of the present invention that mixing region **106** comprises only waveguides and directional couplers that incorporate portions of the waveguides. As a result, embodiments of the present invention can have much lower thermal sensitivity than beam combiners in the prior art.

It is a further aspect of the present invention that embodiments based on high-contrast, undoped silicon nitride- and silicon oxide-based surface waveguides have several unique advantages over other technologies that have the potential for forming a beam combiner, such as lithium niobate waveguides, polymer waveguides, fusion spliced optical fibers, and the like. These advantages include:
i. an ability to taper regions of the waveguides to locally change the characteristics of the propagating mode of light travelling through the system; and
ii. higher optical power handling; and
iii. waveguides having different refractive index contrast, which enables high-contrast waveguide regions where tight mode confinement is desired and low-contrast waveguide regions where desired; and
iv. small-area optical circuits, which enables greater functionality in a smaller footprint; and
v. low transmission loss over a wide range of wavelengths, including for wavelengths as short as 400 nm; and
vi. individual optimization for a specific wavelength to be conveyed by a particular waveguide; and
vii. improved control over the polarization characteristics.

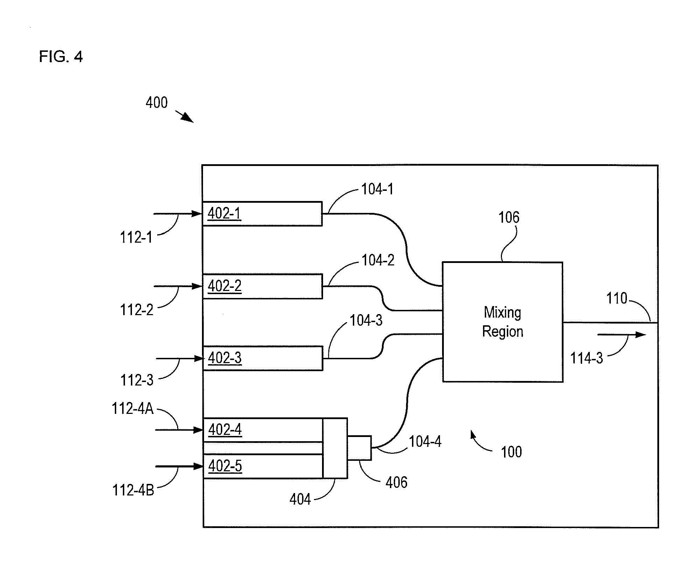

FIG. 4 depicts a schematic drawing of a beam combiner in accordance with a first alternative embodiment of the present invention. Beam combiner **400** comprises beam combiner **100,** mode-matching regions **402-1** through **402-5,** attenuator **404,** and power monitor **406.**

Mode-matching regions **402-1** through **402-5** (referred to, collectively, as mode-matching regions **402)** facilitate low-loss optical coupling between beam combiner **100** and the light sources that provide light signals **112** (*i.e*., fiber-pigtailed laser diodes). As a result, mode-matching regions **402** facilitate low-loss optical coupling with conventional optical fibers (which are typically used as such fiber pigtails).

One skilled in the art will recognize, after reading this Specification, that the output optical mode of the optical fiber of such a source is typically not well matched with the propagation mode in a high-contrast waveguide, such as waveguides **102** and that such a modal mismatch typically introduces high fiber-to-chip coupling loss. Each of mode-matching regions **402,** however, has a cross-section that tapers smoothly from a smaller cross-section at its end facet to substantially the same cross-section as waveguides **102** at an interface where the mode-matching region meets its corresponding waveguide **102.** This enables the mode-matching region to have a low effective refractive-index contrast that (1) substantially matches that of the light source fiber pigtail (thereby enabling low-loss fiber-to-waveguide optical coupling); and (2) transitions adiabatically (*i.e*., substantially without loss) to the high effective refractive-index contrast of waveguide **102.**

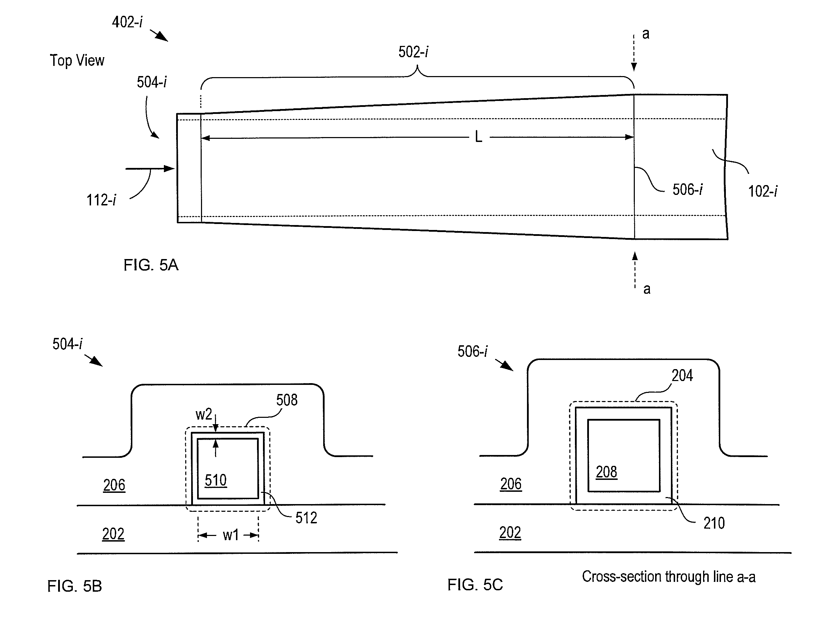

FIG. 5A depicts a schematic drawing of a top view of a mode-matching region in accordance with the first alternative embodiment of the present invention. Mode-matching region **402-*i*** is representative of each of mode-matching regions **402.**

Mode-matching region **402-*i*** is a region of waveguide **102-*i*** whose cross-sectional area is gently tapered such that it increases monotonically from end facet **504-*i*** to interface **506-*i*** along length **L.** Mode-matching region **402-*i*,** therefore, gently transitions from (1) an effective index-contrast that yields a mode-field diameter at end facet **504-*i*** that substantially matches the mode-field diameter of the light source to (2) an effective index-contrast that yields a mode-field diameter at interface **506-*i*** that substantially matches the mode-field diameter of waveguide **102-*i*.** As a result, the optical mode of light propagating through mode-matching region **402-*i*** is matched to the optical mode of the optical fiber pigtail of the light source that provides light signal **112-*i*** at end facet **504-*i*,** while the optical mode of light propagating through mode-matching region **402-*i*** is matched to the optical mode of waveguide **102-*i*** at interface **506-*i*.**

In some embodiments of the present invention, a light source that provides one of light signals **112** is characterized by a high effective index contrast that yields a small mode-field diameter. In such embodiments, therefore, mode-matching region **402-*i*** gently transitions from (1) a cross-section having a high effective index-contrast that yields a mode-field diameter that substantially matches the mode-field diameter of the light source at end facet **504-*i*** to (2) a cross-section having an effective index-contrast that yields a mode-field diameter that substantially matches the mode-field diameter of waveguide **102** at interface **506-*i*.**

FIG. 5B depicts a schematic drawing of a cross-sectional view of the end facet of a mode-matching region in accordance with the first alternative embodiment of the present invention. End facet **504-*i*** is representative of each of end facets **504-1** through **504-4.**

End facet **504-*i*** comprises lower cladding **202,** inner core **510,** outer core **512,** and upper cladding **206.**

Inner core **510** is analogous to inner core **208;** however, inner core **510** has a substantially square cross-sectional shape having a size of **w1,** where **w1** is smaller than the size of inner core **208** (1 micron in the illustrative embodiment). In order to mode-match a conventional optical fiber pigtail at typical wavelengths for light signals **112, w1** is typically within the range of a few hundred nanometers.

Outer core **512** is analogous to outer core **210;** however, outer core **512** has a thickness of **w2,** where **w2** is smaller than the thickness of outer core **210** (200 nm in the illustrative embodiment). In order to mode-match a conventional optical fiber pigtail at typical wavelengths for light signals **112, w2** is approximately equal to several tens of nanometers.

FIG. 5C depicts a schematic drawing of a cross-sectional view of the interface of a mode-matching region in accordance with the first alternative embodiment of the present invention. Interface **506-*i*** is representative of each of interfaces **506-1** through **506-4.**

Interface **506-*i*** comprises lower cladding **202,** inner core **208,** outer core **210,** and upper cladding **206.** In other words, interface **506-*i*** has the same dimensions and layer structure as waveguide **102.** As a result, light propagating through mode-matching region **506-*i*** experiences substantially lossless (*i.e*., adiabatic) transition into waveguide **102.**

Mode-matching region **502-*i*** enables the simultaneous use of both high- and low-index contrast waveguides in beam combiner **400.** High-index contrast enables tight waveguide curvatures needed in large-scale integration optical circuits, whereas low-index contrast is beneficial for good fiber-to-chip coupling and low-loss waveguide crossings.

In some embodiments, at least one of the light sources that provides a light signal **112** does not include an optical fiber pigtail. In such embodiments, the output facet of the light source is optically coupled directly with a mode-matching region that includes an end facet having suitable dimensions for matching the output mode of the light signal exiting the output facet of the light source.

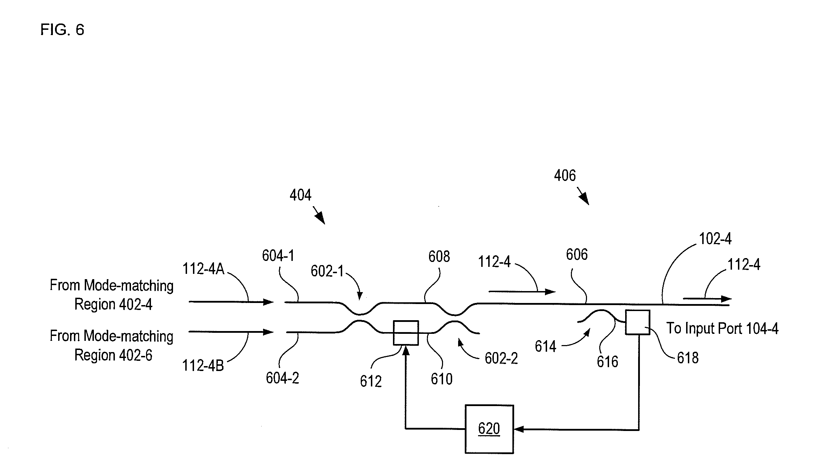

FIG. 6 depicts a schematic drawing of an attenuator/switch and optical monitor in accordance with the first alternative embodiment of the present invention.

Attenuator **404** comprises directional couplers **602-1** and **602-2,** input ports **604-1** and **604-2,** output waveguide **606,** waveguide portions **608** and **610,** and modulator **612.**

Directional couplers **602-1** and **602-2** are substantially identical directional couplers are arranged in a series arrangement and interposed and optically coupled by waveguide portions **608** and **610.** Waveguide portion **608** is a portion of waveguide **102-4,** as shown above and with respect to FIG. 4. Waveguide portion **610** is analogous to waveguide **102-4.**

Input ports **604-1** and **604-2** receive light signals **112-4A** and **112-4B** from mode-matching regions **402-4** and **402-5,** respectively. Light signals **112-4A** and **112-4B** are provided by substantially identical light sources; therefore, they are characterized by substantially the same wavelength.

Modulator **612** comprises a heater strip for inducing a phase shift in the light that propagates through waveguide **610** to induce a desired amount of constructive or destructive interference between the light signals in waveguides **608** and **610.** By controlling the phase of the light in waveguide **610,** therefore, light signal **112-4A,** light signal **112-4B,** or any combination of light signals **112-4A** and **112-4B** can be provided as light signal **112-4** on output waveguide **606.** In other words, attenuator **404** can be made to behave as a variable optical attenuator and/or optical switch.

Although the illustrative embodiment comprises modulators that operate on a thermo-optic effect, it will be clear to one skilled in the art, after reading this Specification, how to specify, make, and use alternative embodiments of the present invention that comprise modulators that induce a phase shift in light propagating in a waveguide based on a different effect, such as electro-optic, opto-mechanical, *etc*.

Optical monitor **406** comprises directional coupler **614,** output waveguide **606,** waveguide portion **616,** photodetector **618,** and controller **620.**

Directional coupler **614** receives light signal **112-4** on output waveguide **606** of attenuator **404** and enables a small percentage of its optical power to be coupled from output waveguide **606** into waveguide portion **616.** Waveguide portion **616** is analogous to waveguide **102.** Preferably, directional coupler is an asymmetric coupler; however, in some embodiments, directional coupler **614** is a symmetric coupler.

Waveguide portion **616** is optically coupled with photodetector **618,** which is a conventional device for providing an electrical signal indicative of the intensity of light coupled into waveguide portion **616** (*e.g*., photodiode, avalanche photodiode, CCD sensor element, *etc*.). Photodetector **618** is electrically coupled with controller **620,** which controls the output of the light sources that provide light signals **112-4A** and **112-4B** and modulator **612.** When photodetector **618** detects that the intensity of light signal **112-4** has dropped below a user-determined threshold value, the controller drives modulator **612** to enable attenuator **404** to reconfigure light signals **112-4A** and **112-4B** on output waveguide **606.** As a result, the downtime of a system that includes the beam combiner **100** can be reduced.

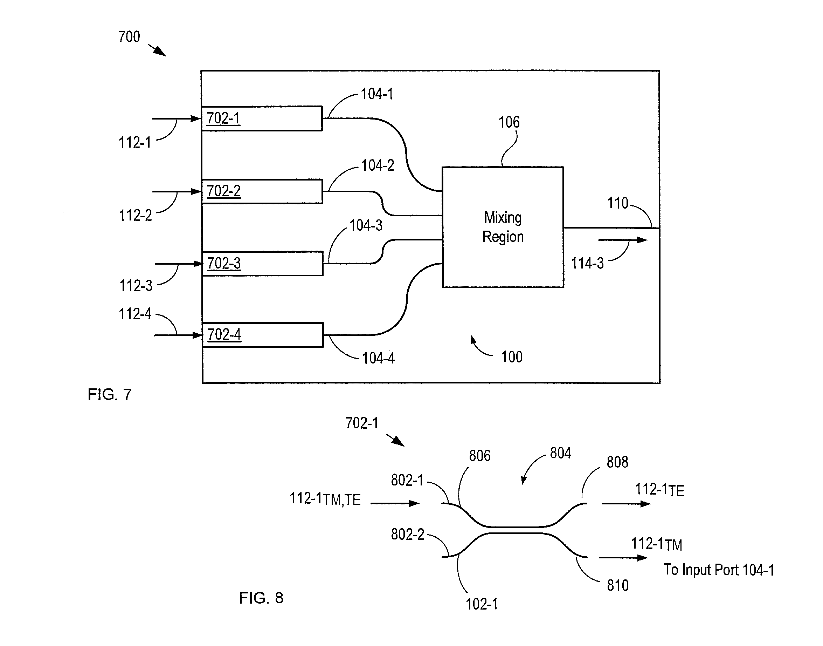

FIG. 7 depicts a schematic drawing of a beam combiner in accordance with a second alternative embodiment of the present invention. Beam combiner **700** comprises beam combiner **100** and polarization filters **702-1** through **702-4.** Polarization filters **702-1** through **702-4** (referred to, collectively, as filters **702)** provide suppression of the TE polarization mode of light signals **112,** wherein this suppression augments the TE mode suppression provided inherently by the directional couplers in mixing region **106.**

FIG. 8 depicts a schematic drawing of a polarization filter in accordance with the second alternative embodiment of the present invention. Filter **702-1** comprises inputs **802-1** and **802-2,** directional coupler **804,** and outputs **808** and **810.** Filter **702-1** is representative of each of filters **702.**

Light signal **112-1** (denoted as **112-1_{TM,TE}** to indicate the presence of both the TE and TM polarization modes in the light signal) is received by filter **702-1** at input **802-1.**

Directional coupler **804,** which comprises waveguide **102-1** and waveguide portion **806,** is analogous to directional couplers **108,** described above and with respect to FIG. 1. Directional coupler **804** preferentially couples the TM polarization mode from waveguide portion **806** into waveguide **102-1.** One skilled in the art will recognize, after reading this Specification, that the coupling strength of directional coupler **804** for the TM polarization mode is significantly greater than the coupling strength for the TE polarization mode.

As a result, nearly all, or substantially all, of light signal **112-1_{TE}** propagates through directional coupler **804** on waveguide portion **806** while nearly all, or substantially all, of light signal **112-1_{TM}** is coupled into waveguide **102-1** and is provided to output port **810.** A typical TM/TE extinction ratio for directional coupler **804** is approximately 10 dB, for example. It should be noted that additional suppression of the TE mode of light signal **112-1** (as well as each of light signals **112-2** through **112-4)** occurs at each directional coupler included in mixing region **106.** As a result, beam combiner **600** substantially strips the TE mode of each of light signals **112** while combining the TM mode of the signals into composite output signal **114-3.**

It is to be understood that the disclosure teaches just one example of the illustrative embodiment and that many variations of the invention can easily be devised by those skilled in the art after reading this disclosure and that the scope of the present invention is to be determined by the following claims.

## Claims

1. A beam combiner that includes a planar lightwave circuit comprising:
a plurality of input ports;
a mixing region, the mixing region comprising a plurality of directional couplers that are arranged in a first arrangement comprising a tree structure; and
a first output port that is optically coupled with the plurality of input ports via the mixing region.

2. The beam combiner of claim 1 wherein the plurality of directional couplers comprises:
a first directional coupler that is dimensioned and arranged to enable a first light signal in a first waveguide to substantially completely couple into a second waveguide and substantially disable a second light signal in the second waveguide from coupling into the first waveguide;
a second directional coupler that is dimensioned and arranged to enable a third light signal in a third waveguide to substantially completely couple into a fourth waveguide and substantially disable a fourth light signal in the fourth waveguide from coupling into the third waveguide; and
a third directional coupler that is dimensioned and arranged to enable the first light signal and the second light signal in the second waveguide to substantially completely couple into the fourth waveguide and substantially disable the third light signal and fourth light signal in the fourth waveguide from coupling into the second waveguide.

3. The beam combiner of claim 1 wherein the plurality of input ports comprises a first input port having a first waveguide portion and a second waveguide portion, the first waveguide portion being **characterized by** a refractive-index contrast that is lower than the refractive-index contrast of a second waveguide portion.

4. The beam combiner of claim 3 wherein the first input port comprises a first surface waveguide that includes a first tapered region having a first length, wherein the cross-sectional area of the first surface waveguide changes monotonically along the first length.

5. The beam combiner of claim 1 wherein the planar lightwave circuit comprises a first surface waveguide having an inner core comprising silicon dioxide, an outer core comprising silicon nitride, and an upper cladding comprising silicon dioxide.

6. The beam combiner of claim 1 wherein the planar lightwave circuit comprises a first surface waveguide having a core comprising silicon nitride.

7. The beam combiner of claim 1 wherein the planar lightwave circuit comprises a first surface waveguide comprising:
a first layer comprising silicon nitride; and
a second layer comprising silicon dioxide, the second layer disposed on and in contact with the first layer, and the second layer being a TEOS-based layer.

8. The beam combiner of claim 1 wherein the planar lightwave circuit comprises an attenuator comprising a first directional coupler, a second directional coupler, and a phase adjuster, wherein the first directional coupler and the second directional coupler are optically coupled in a series arrangement, and wherein the phase adjuster controls attenuation of light propagating through the attenuator.

9. The beam combiner of claim 1 wherein the plurality of input ports comprises a first input port having an end facet that is optical-mode-matched with an optical fiber.

10. The beam combiner of claim 1 wherein the plurality of input ports comprises a first input port having an end facet that is substantially optical-mode-matched with the output optical-mode of a laser diode.

11. The beam combiner of claim 1 wherein the plurality of input ports comprises a first input port that is substantially wavelength tunable over a wavelength range.

12. The beam combiner of claim 1 wherein the planar lightwave circuit comprises a first waveguide portion and a second waveguide portion, the first waveguide portion and second waveguide portion being optically coupled, wherein the first waveguide portion is **characterized by** a first refractive-index contrast, and wherein the second waveguide portion is **characterized by** a second refractive-index contrast that is higher than the first refractive-index contrast.

13. The beam combiner of claim 1 wherein the plurality of input ports comprises a first directional coupler that is dimensioned and arranged to (1) enable each of a first light signal and a second light signal in a first waveguide to substantially completely couple from the first waveguide into a second waveguide and (2) substantially disable optical coupling of each of a third light signal and a fourth light signal in the second waveguide from the second waveguide into the first waveguide.

14. The beam combiner of claim 1 further comprising a first polarization filter that is optically coupled with a first input port of the plurality of input ports, the first polarization filter receiving a first light signal comprising a first polarization mode having a first magnitude and a second polarization mode having a second magnitude, wherein the first polarization filter provides the first light signal to the first input port such that the first polarization mode has a third magnitude that is substantially equal to the first magnitude and the second polarization mode has a fourth magnitude that is less than the second magnitude.

15. The beam combiner of claim 1, wherein the plurality of directional couplers comprises a first directional coupler comprising a first waveguide and a second waveguide, and wherein the first directional coupler is dimensioned and arranged to enable a first plurality of light signals of different wavelengths to optically couple from the first waveguide into the second waveguide and disable the optical coupling of a second plurality of light signals of different wavelengths to optically couple from the second waveguide into the first waveguide.
